# EUROPEAN PATENT SPECIFICATION

(11) **EP 4 370 949 B1**
(45) Date of publication and mention of the grant of the patent: **30.09.2026**
(21) Application number: 22747344.4
(22) Date of filing: 14.07.2022
(51) Int. Cl.: G01S 7/481

(54) **SENSOR FOR AUTOMATIC DOORS OR AUTOMATIC GATES AND AUTOMATIC DOOR OR AUTOMATIC GATE WITH SUCH SENSOR**
SENSOR FÜR AUTOMATISCHE TÜREN ODER AUTOMATISCHE TORE UND AUTOMATISCHES TOR MIT EINEM SOLCHEN SENSOR
CAPTEUR POUR PORTES OU PORTAILS AUTOMATIQUES, ET PORTE OU PORTAIL AUTOMATIQUE DOTÉ DUDIT CAPTEUR

(30) Priority: 14.07.2021 DE 102021118240
(43) Date of publication of application: 22.05.2024
(73) Proprietor: BEA S.A., 4031 Angleur (BE)
(72) Inventor: KLEIN, Jean-François, 4121 Neupré (BE); ZAMBON, Alain Louis, 4420 Saint-Nicolas (BE); LENAERTS, Eric Jean Herman Marie Léon, 4000 Liège (BE); LEFEVRE, Benjamin Jacques Charles Fernand, 5300 Andenne (BE)
(74) Representative: patcare Patentanwälte Partnerschaft mbB
(86) International application number: PCT/EP2022/069801
(87) International publication number: WO 2023/285624

(56) References cited:
- DE-A1- 102013 012 789
- US-A1- 2008 007 710
- US-B1- 10 324 170

## Description

The invention refers to a sensor for automatic doors or automatic gates to detect objects in the vicinity of the door opening according to claim 1.

A laser scanner is known from WO 2015/014556 A1, where a rotating mirror is used to produce a scanning field of less than 180°. A similar solution is disclosed in DE 10 2015 013 710 A1.

US 7,349,074 B2 and US 2008/0007710 A1 disclose a multiple plane laser scanner having tilted facets, which has a scanning angle of about 90°. US 10,324,170 B1 discloses a multi laser scanner using a polygon mirror to provide the horizontal field of view and a further mirror to sweep the incident beam along the direction of the rotation axis of the polygon mirror. A so called two-eyed solution is disclosed to increase the field of view.

DE 10 2013 012 789 A1 discloses a LIDAR device using a flat mirror to provide a large field of view at a compact size of the LIDAR device.

The invention is related to a sensor for use on automatic doors or automatic gates. The sensor works based on pulse echo evaluation of a light-pulse, preferably by evaluating the time-of-flight of emitted and echoed light-pulses, to determine the distance of an object relative to the sensor. The sensor acts on a door controller providing a signal to the door controller so that the door controller can decide whether a certain behavior of the door is required, depending on the detected position of an object or person in the vicinity of the door opening. Such a behavior for a door controller to monitor the safety of a gate is usually to stop or reverse a closing or opening movement.

Usually, automatic doors or automatic gates, especially sliding doors, are monitored in a way that the main closing edges are safeguarded, as they are regarded most hazardous during the closing of the door.

Nevertheless, critical situations may occur also during an opening operation of the door when e.g. a sliding door opens against a wall, for a person can be crushed in between the opening door leaf and the wall.

This situation cannot be properly monitored by the prior art door sensors while monitoring the main closing edges.

It is the object of the invention to improve the scanning area parallel to the door plane by maintaining a high precision of the sensors that are monitoring automatic doors.

The sensor according to the invention comprises at least one rotating mirror, where the rotating mirror has at least three different reflecting emitting mirror facets arranged around its rotational axis. The rotating mirror is driven by a motor. The rotational axis lies normal to a reference plane.

The sensor furthermore comprises a light-pulse generation unit including an emitter. The light-pulse generation unit generates light-pulses which are reflected by the mirror facets. The light-pulses are sent towards the rotating mirror via two different emitting optical paths. Each of the different emitting optical paths comprises at least one optical component. Especially emitters, lenses and mirrors are understood as optical components.

The two emitting optical paths define an incident pulse direction that is the direction of the pulse with which it hits the mirror.

The projections of both incident pulse directions onto the reference plane, which are further called incident beam projections, intersect at an intersecting point with an intersecting angle of less than 160°, preferably between 30° and 160°. An intersection plane is defined through the intersecting point where the intersection plane is normal to the bisectrix of the projections of the incident pulses, where the bisectrix lies in the reference plane.

The intersecting angle is smaller than 160° to allow a scanning field of more than 180°.

The incident beam projections have a width perpendicular to their incident pulse direction, where the intersecting point is preferably at the center line of the incident beam projections.

The rotation axis of the rotating mirror intersects the bisectrix, where the rotation axis of the mirror is positioned in a way that the generated scanning field has a scanning angle that is larger than 150°.

Each emitting optical path comprises an optical component being closest to the rotating mirror following the incident beam. These optical components are called "closest optical component" in the following.

To achieve the large scanning angle, the rotating mirror is positioned with its rotational axis being located between the intersection plane and the closest optical components.

The distance of the closest optical component to the intersection plane is determined from the outermost edge of the beam at the closest optical component.

The pulses are sent out of the sensor by reflecting the incident pulses on the emitting mirror facets. These reflected pulses establish a scanning field where these reflected pulses are echoed back by an object in the scanning field. The reflected pulses define a scanning field of a scanning angle that stretches between the outermost reflected beam projections, where the reflected beam projections are the projections of the reflected pulses on the reference plane.

Preferably, the incident pulses can have a direction that is essentially parallel to the reference plane. "Essentially parallel" in this context means parallel with a maximum deviation of 45°, more preferably with a maximum deviation of 30°, more preferably with a maximum deviation of 15°.

The mirror and, accordingly, the rotational axis of the mirror are set in a way that the reflected beam projections from each of both incident optical paths have an innermost reflected pulse that is at least parallel to the bisectrix or even crosses the bisectrix distant to the intersection plane, namely on the side of the scanning field. According to this, the scanning field is an almost continuous field from one outermost reflected beam to the outermost reflected beam on the other side.

The sensor furthermore comprises a rotating mirror that has the same amount of receiving mirror facets as emitting mirror facets, where the light-pulse being echoed back from an object are deflected.

The sensor furthermore comprises a receiving means which receives the light-pulse being echoed back by an object in the scanning field where the echoed pulse is deflected by the receiving mirror facet and is then received by the receiving means in a way that it is distinguishable over which emitting optical path the emitted pulse of the echoed pulse was initially sent. The sensor comprises a receiving lens that is positioned in between the rotating mirror and the receiving means. The receiving lens has an optically effective width. The width is preferably the diameter of the lens perpendicular to its optical axis.

Preferably the two receiving optical paths are separate optical paths, where more preferably the receiving means comprises two separate receivers, where each is dedicated to a receiving optical path.

The sensor preferably comprises an evaluation unit that determines the distance of an object by evaluating the time of flight of the light-pulse from its emission to its reception.

The evaluation unit defines a monitored area and determines whether the measured distance is within the monitored area. The evaluation unit can output a control signal to communicate whether an object is located in the monitored area.

Due to the setup according to the invention, a sensor is provided which can scan an area having a scanning angle of at least 160°, providing at least three curtains. The three curtains may be in the same plane or in planes inclined relative to each other.

Due to the invention the sensor can be embodied as a rather small device that provides a high scanning speed and / or high resolution over a large scanning range.

According to a further embodiment of the invention, each of the emitting mirror facets can have a different inclination relative to the rotation axis. The same is valid for the receiving mirror facets. The different inclinations allow the sensor to scan planes that are tilted differently relative to each other. Accordingly, the sensor can scan not only one plane but a three-dimensional space over a large width. E.g., a so called "0°-facet" is parallel to the rotation axis, where a further mirror facet is inclined at +2° relative to the rotation axis and another further mirror facet is inclined at e.g. -2° relative to the rotation axis. According to this example, the angles of +2° and -2° are inclined in the opposite tilt direction to the "0°-facet". In both cases the absolute angle between the reflective surface and the rotational axis is 2°.

Accordingly, the inclined facets, except the 0° facet, have a tilting axis around which the facets are tilted. Preferably, the tilting axles are at the same height of the facets, more preferably at the middle of the height of the facet. In this case, the circumradius of the mirror can be determined at the height of the tilting axles.

According to a further advantageous embodiment of the invention, the sensor fulfills the subsequently described conditions.

The pulse emitted at a first angular position of the mirror defines a starting angle of mirror rotation for the outermost pulse, with the first mirror facet defining a first mirror line at that angular position.

A first mirror facet intersects the emitted pulse at a second angular position of the mirror to define an end angle for the innermost pulse, the mirror defining a second mirror line at this angular position.

A pulse corridor is defined around the emitting beam projection having the width of the receiving lens.

The pulse corridor on the reference plane is delimited by an inner borderline and an outer borderline, where the inner borderline is on the opposite side of the scanning field relative to the center line of emitting beam projection.

The second mirror line intersects the first mirror line within the pulse corridor.

Furthermore, a first rotation-center line is defined that intersects the intersection point of the outer borderline and the first mirror line, where the angle A_{(ML1-RCL1)} between the first mirror line and the first rotation-center line is A_{(ML1-RCL1)} = (N - 2) * 90 / N, where the rotation-center line crosses the bisectrix, where N is the number of facets.

Furthermore, a second rotation-center line is defined that intersects the intersection point of the inner borderline and the second mirror line, where the angle A_{(ML2-RCL2)} between the second mirror line and the second rotation-center line is defined by A_{(ML2-RCL2)}= (N - 2) * 90 / N, where the rotation-center line crosses the bisectrix.

The rotation-center lines are chosen so that the rotation-center lines define a triangle with the mirror lines, where the mirror lines include an acute angle.

The mirror lines preferably intersect within the pulse corridor.

The inradius of the mirror is at least the distance of the center of rotation to the mirror lines. Since the center of rotation is preferably located on the bisectrix of the two mirror lines, the distance to both mirror lines is preferably the same.

The rotational axis is located essentially at the intersection of the rotation-center lines.

A sensor with a configuration that meets these conditions provides a large scanning field at a very small possible device size.

According to a further advantageous embodiment of the invention the number of facets N of the mirror is three, four or five. This number N of emitting facets allows a scanning range of about 180° and more, maintaining a reasonable device size.

According to a further embodiment of the invention the previously described door sensor comprises a housing, where the housing comprises a curved window that is transparent for the emitting pulse, as well as for the receiving pulse. The curved window stretches from a start angular position to an end angular position, where the rotational axis of the rotating mirror is located between the line connecting the start position and the end position (of the curved window) and the curved window at the angular position centered between the start angular position and the end angular position of the curved window. The window is not necessarily continuously transparent but may comprise a non-transparent part in its middle.

This setup makes it possible to scan a scanning range of about 180° and more by keeping the device size of the sensor rather small.

According to a further embodiment of the invention, the sensor is embodied in a way that the sensor comprises an optical feedback component which can guide a beam from the emitting optical path to the receiving optical path at a certain angular rotation position of the mirror, namely a feedback position.

This allows to transfer the emitted beam from an emission part to a reception part of the sensor. The emission and reception part are optically shielded from one another to avoid stray light influence from the emission to the reception part.

The rotating mirror can advantageously comprise at least one mirror facet having a width so that the emitting beam is reflected by the mirror facet at the feedback position to hit the optical feedback component.

The sensor can comprise an optical feedback determination unit to determine the properties of the emitted pulses that are not echoed back by an object in the scanning field.

The optical feedback component can be positioned between the rotating mirror and the curved window. In this case the optical feedback components are placed at an angle relative to the emitting beam that is larger than that of the innermost beam.

Alternatively, particularly by having three mirror facets, the optical feedback can be at a position in between the incident optical paths. In this case the optical feedback component does not lead to a shadowing effect in the scanning field.

According to a further improvement of the invention, the first emitting optical path and the corresponding receiving optical path are positioned one atop the other, as seen in a direction orthogonal to the reference plane.

In case that the emitting optical path and the receiving optical path are arranged one atop the other, the mirror also comprises the emitting mirror facets and the receiving mirror facets that are parallel to each other. Preferably, an optical shielding is present between the emitting mirror facets and the receiving mirror facets.

Advantageously, such a rotating mirror is embodied as a one-piece element driven by a single motor. This has the advantage that no special synchronization is necessary between the emitting and the receiving part.

According to a further advantageous aspect of the invention, the width of at least one facet is larger than that of the other facets. The angular optical feedback position of the rotating mirror is then set to an angular position at which the enlarged part of the facet is hit by the emitting pulse and is then reflected to an optical feedback component. The optical feedback component can comprise a mirror and / or an optical fiber and / or a prism.

A further aspect of the invention relates to an automatic door or gate.

An automatic door or gate comprises at least one leaf that is at least partially covering a door opening. The at least one leaf is driven by a motor which is controlled by a door controller, where control signals are fed to the door controller to act on the motor to e.g., stop or reverse the current motion.

Commonly the door controller comprises input ports that are separate inputs for each function, e.g., "reopen", "stop" or "reverse", where the control is triggered by closing or opening an input switch connected to the port.

Preferably, the input switch is part of the sensor that triggers dedicated switches due to a certain detection situation.

Alternatively, the signal can be communicated to the door controller via a bus system, preferably CAN-Bus.

The automatic door or gate according to the invention comprises a sensor having two light-pulse echo units and one rotating mirror and an evaluation unit determining a position depending on the detection of an object within the combined scanning field provided by two light-pulse echo units, where each optical light-pulse echo unit comprises an emitting and receiving unit. The two light-pulse echo units provide a light path via the rotating mirror, where the combined scanning field provided by both optical light-pulse echo units has a scanning angle of more than 160° and preferably provides a region that is monitored by both optical light-pulse echo units.

Accordingly, the common scanning field is a combination of the two scanning areas provided by the two light-pulse echo units.

Since there is a mechanically defined relation between the two scanning fields by using the common rotating mirror, this allows a very precise measurement of an object position within the scanning field. This is important especially for small objects like fingers, or the like.

Due to an evaluation of the overlapping region of the two scanning areas a masking effect can be reduced. The coverage can be improved as well, as there is no angular derivation in the setup of different laser scanners.

The sensor can preferably be embodied as previously described in detail.

Sensors to safeguard automatic doors or gates are mounted either on the door frame, on the leaf of the door or gate or in the vicinity of the door or gate, respectively.

Such sensors submit a detection status to the door controller, where the door controller, which has knowledge of the current operation mode of the motor and may even have knowledge of the current position of the door leaf, may control the door or gate depending on the detection status information.

According to a further embodiment of the automatic door, the door can be of a swing door type, either of a single leaf or double leaf type. The swing door leaf may comprise a sensor according to the invention that is attached to the door leaf in a way that it monitors the main closing edge as well as the secondary closing edge at the same time.

In this case two danger zones can be monitored with the wiring effort of connecting only one sensor device.

According to a further embodiment of an automatic gate, the gate can be of the swing gate type. This could be a single leaf type or double leaf type. As in difference to swing doors the top edge of the leaf can be of a lower height. By providing a sensor of a detection range of more than 180°, it is possible to fully monitor the hinged area up to the top although the sensor device might be placed below the top edge of the leaf. This could, e.g., be in the middle of the leaf as viewed in its lateral extension.

According to a further embodiment of the invention, the automatic sliding door can be of a single leaf or double leaf type. The sensor is preferably attached to the door frame and monitors the opening on the one side of the sensor and the secondary closing edge on the other side.

An automatic sliding door of the double leaf type comprises two automatically driven sliding door leaves, where the scanner is mounted atop the sliding door leaves and provides at least one curtain that extends in vertical direction generally parallel to the door leaves or in a very acute angle relative to the door leaves. The door leaves each have a main closing edge and a secondary closing edge, where the scanning field covers the position of the main closing edges in a fully closed state of the door as well as the position of the secondary closing edges in a fully open state of the door.

The sensor preferably provides at least three subsequent zones in width direction, where the scanner has a first secondary closing edge zone, a main zone, and a second secondary closing edge zone. A detection event in the first secondary closing edge zone leads to a first signal to trigger a first action on a door controller, a detection event within the main zone leads to a signal to trigger a second action being different from the first action and a detection event in the third zone leads to a signal to trigger a third action being different to the second action. The third action can be different to the first action or the same as the first action.

Preferably the first action is a stop action and the second is a reverse action.

Preferably the door sensor is embodied as previously described.

Further advantages, features and potential applications of the present invention may be gathered from the description which follows, in conjunction with the embodiments illustrated in the drawings.

Throughout the description, the claims and the drawings, those terms and associated reference signs will be used as are notable from the enclosed list of reference signs. In the drawings is shown
- Fig. 1a: shows a perspective view of the essential optical parts of one embodiment of the sensor;
- Fig. 1b: shows a top view of the components of Fig. 1a including housing;
- Fig. 2a: shows another top view of Fig. 1a;
- Fig. 2b: incident beam projection of the emitting beams on the reference plane, of the sensor of Fig. 1a;
- Fig. 2c: incident optical beam projection showing a first mirror line to generate an outermost beam;
- Fig. 2d: incident optical beam projection showing the second mirror line for the innermost beam;
- Fig. 2e: combination of the first and second mirror lines defining the position of the rotation axis;
- Fig. 3a: perspective view of a further embodiment of the invention;
- Fig. 3b: top view of the embodiment according to Fig. 3a;
- Fig. 4a: top view of the embodiment according to Fig. 3a;
- Fig. 4b: incident beam projection of one emitting beam on the reference plane of the sensor of Fig. 3a;
- Fig. 4c: incident optical beam projection showing a first mirror line to generate an outermost beam;
- Fig. 4d: incident optical beam projection showing the second mirror line for the innermost beam;
- Fig. 4e: combination of the first and second mirror lines defining the position of the rotation axis;
- Fig. 5: shows an automatic door comprising a sensor according to the invention, and
- Fig. 6: shows a schematic view of a sensor according to the invention, as it is used on an automatic door or gate.

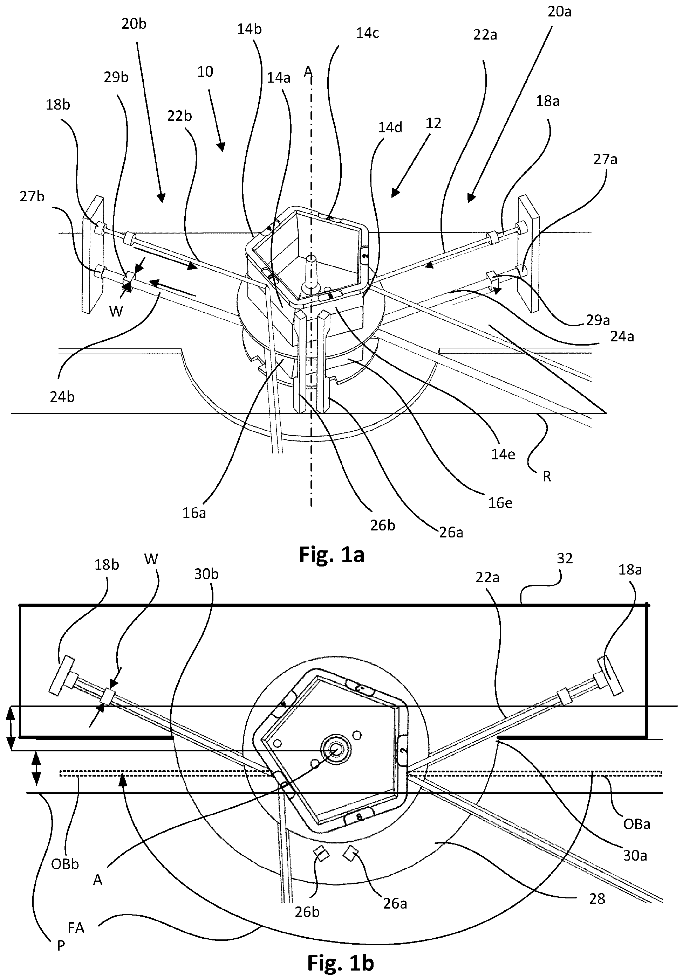

Fig. 1a shows a perspective view of the essential optical parts of a sensor 10. The sensor 10 comprises a rotating mirror 12 rotating about a rotation axis A. The rotating mirror comprises five emitting mirror facets 14a, 14b, 14c, 14d, 14e, having different inclinations relative to the rotational axis A. Analogously, the rotating mirror 12 comprises five receiving mirror facets 16a, 16b, 16c, 16d, 16e having the same inclination as the emitting mirror facets at the same position.

Furthermore, the sensor 10 comprises two separate optical components that are embodied as pulse generation units 18a, 18b emitting laser pulses along an emitting optical path to be reflected on the emitting mirror facets, 14a to 14e.

The emitting optical paths 20a, 20b are embodied in a way that they provide an incident beam direction the pulses have before they can be reflected by the mirror 12. An emitting beam 22a can be sent along the first optical path 20a and another beam can be sent along the second optical path 20b. In Fig. 1 the emitting beam 22a sent along the first optical path 20a is shown in the direction it would have if it were not reflected by the mirror. The beam 22b sent along the second optical path is shown to be reflected by the emitting mirror facet 14a. The reflected beam establishes a scanning field due to the rotation of the rotating mirror 12, where the pulses are echoed back by an object present in the scanning field. The echoed back pulses are received as receiving beam 24b. The receiving beams are received by receivers 27a, 27b that are dedicated to receiving optical paths. The rotation axis A lies normal to the reference plane R. Each receiving beam 24a, 24b travels through the receiving lens 29a, 29b, that is schematically shown, before reaching the receivers 27a, 27b. Each receiving beam 24a, 24b is focused to hit the corresponding receiver 27a, 27b, where each receiving lens 29a, 29b has an optically effective diameter of the curved part of the lens and is seen as the width W of the lens as it defines the size of the receivable beam. Fig.1b shows a top view of Fig.1a, where additionally a housing is indicated. It can be seen from this view that the rotation axis A lies in between the intersection plane P and the closest optical components 18a,18b, which are in this case embodied as emitters. This setup allows a large field angle FA of the scanning field stretching between the two outermost beams OBa, OBb. The field angle FA in this case is about 180°. In Fig. 1b it is further schematically shown that sensor 10 comprises a first non-transparent housing 32 and a transparent window 28 which is embodied in a curved way. The window 28 stretches from a first angular position to a second angular position. The non-transparent walls in this position lie between the optical components and the rotation axis of the mirror.

It is further derivable from Fig. 1a that the 0° facet 14a, that is parallel to the rotation axis, is wider than the other facets. This allows a reflection at an angular rotation position to hit the optical feedback component 26a or the optical feedback component 26b at another angular rotation position, respectively. The optical feedback components 26a, 26b each comprises two mirrors to provide a periscope to deflect the beam from the emitting part to the receiving part of the sensor.

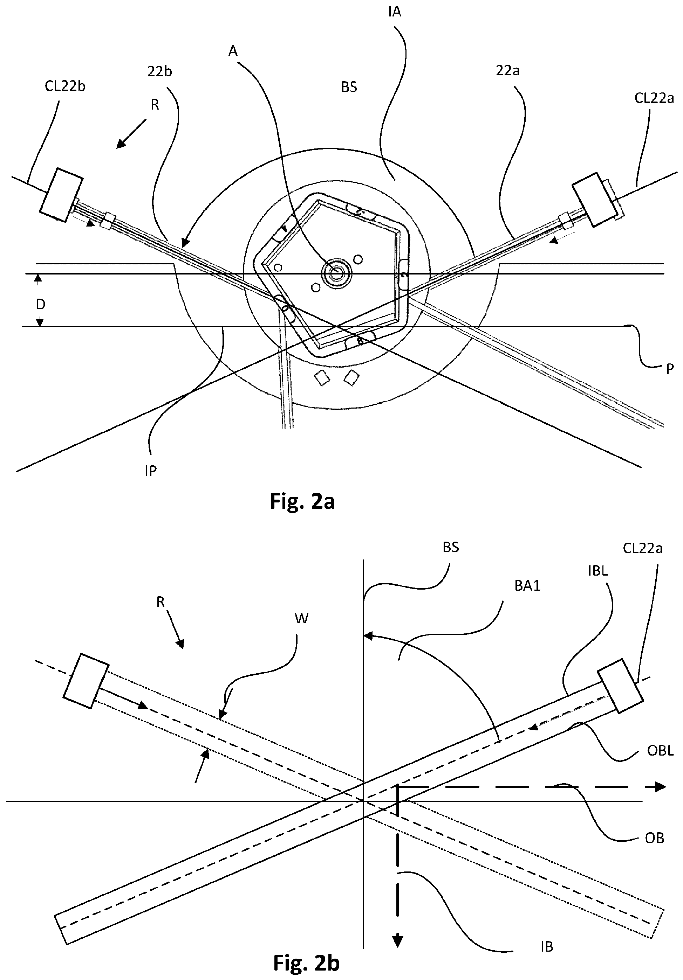

Fig. 2a shows another top view of the sensor 10 of Fig. 1a. It can be seen from Fig. 1b that the incident beams are in this view the same as the incident beam projections referred to in Figs. 2b to 2e. These incident beam projections, namely the center lines CL-22a and CL-22b, would cross at an intersecting point which lies in an intersection plane that is normal to the reference plane and the bisectrix BS of the intersecting angle IA which lies in the reference plane. The intersecting angle IA in this example is 130°.

As can be seen in Fig. 2a the mirror is of a pentagon shape and rotates about the rotation axis A.

According to the invention, there is a distance D between the intersection plane P and the rotation axis A to the emitting side. This setup allows to project an almost continuous scanning field over a large angular range providing multiple scanning curtains.

Fig. 2b shows the incident beam projections 22a, 22b, where the following explanation of the determination of the rotation center is explained only by the incident beam projection 22a, where the bisectrix BS is the axis of symmetry.

Fig. 2b shows the beam projection 22a with its center line CL22a around which there is a pulse corridor defined by the size of the receiving lens, compare 29a, 29b of Fig. 1a, namely its width W as seen in the reference plane and perpendicular to the beam direction, having exemplarily about 1.5 times the width of the beam projection 22a. The corridor is defined by an inner border line IBL and an outer border line OBL. The part of the scanning field generated by the first incident beam 22a is established between an outermost beam OB at a first angular rotary position of the rotating mirror 12 and an innermost beam IB at a second angular rotary position.

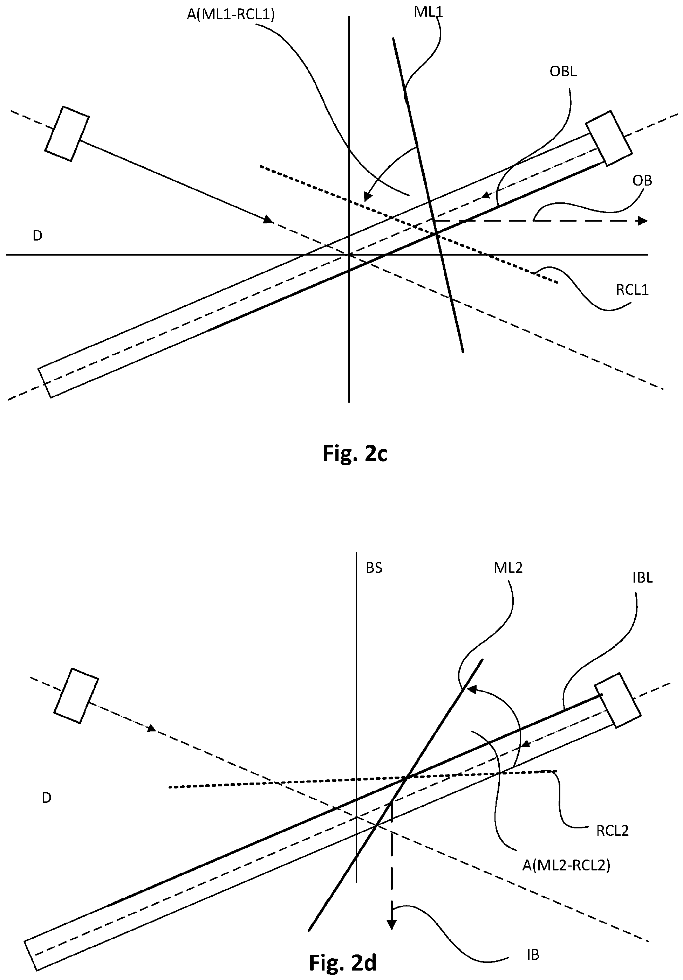

Fig. 2c shows a first mirror line ML1 in the first angular rotary position of the rotating mirror to generate the outermost beam OB. At the intersection of the first mirror line with the outer borderline, a first rotation-center line is defined, which crosses the intersection of the outer borderline and the first mirror line. The angle between the first mirror line and the first rotation-center line is A_{(ML1-RCL1)} = (N - 2) * 90 / N, where the rotation-center line crosses the bisectrix. N is the number of facets of the mirror which, according to this example, is five. The angle between the rotation-center line RCL1 and the first mirror line ML1 is 54°.

Fig. 2d shows a second mirror line ML2 in the second angular rotary position of the rotating mirror to generate the innermost beam IB. A second rotation-center line RCL2 is defined which crosses the intersection of the inner borderline IBL and the second mirror line ML2, where the angle between the second mirror line ML2 and the second rotation-center line RCL2 is A(ML2-RCL2) = (N - 2) * 90 / N. The rotation-center line RCL2 crosses the bisectrix. The angle between the rotation-center line RCL2 and the first mirror line ML2 is 54°.

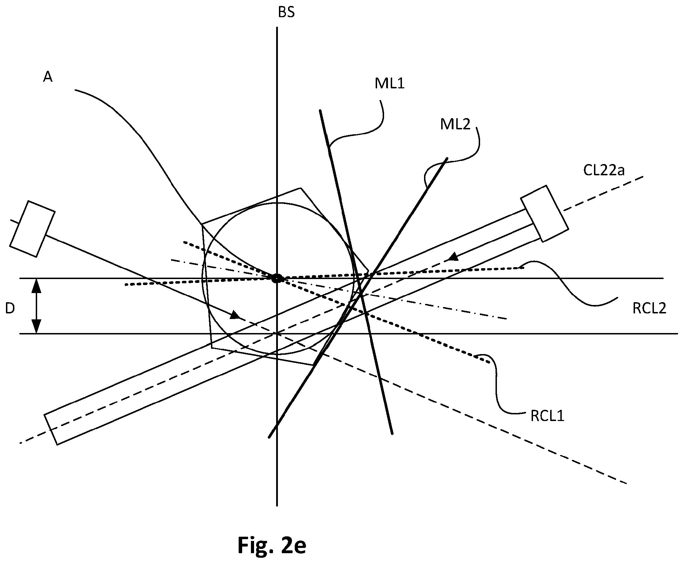

Fig. 2e shows the combination of Fig. 2c and Fig. 2d where the first rotation-center line RCL1 and the second rotation-center line RCL2 cross at the bisectrix and define the position of the rotation axis. Furthermore, the rotation-center lines RCL1, RCL2 cross the bisectrix of the mirror lines ML1 ML2.

The inradius of the facets of the rotating mirror is at least the distance of the center of rotation to the mirror line.

The rotation-center lines RCL1, RCL2 are chosen in a way that each rotation-center line RCL1, RCL2 defines a triangle with the mirror lines ML1, ML2, where the mirror lines ML1, ML2 include an acute angle. The mirror lines ML1, ML2 cross inside the corridor between the outer border line OBL and the inner border line IBL.

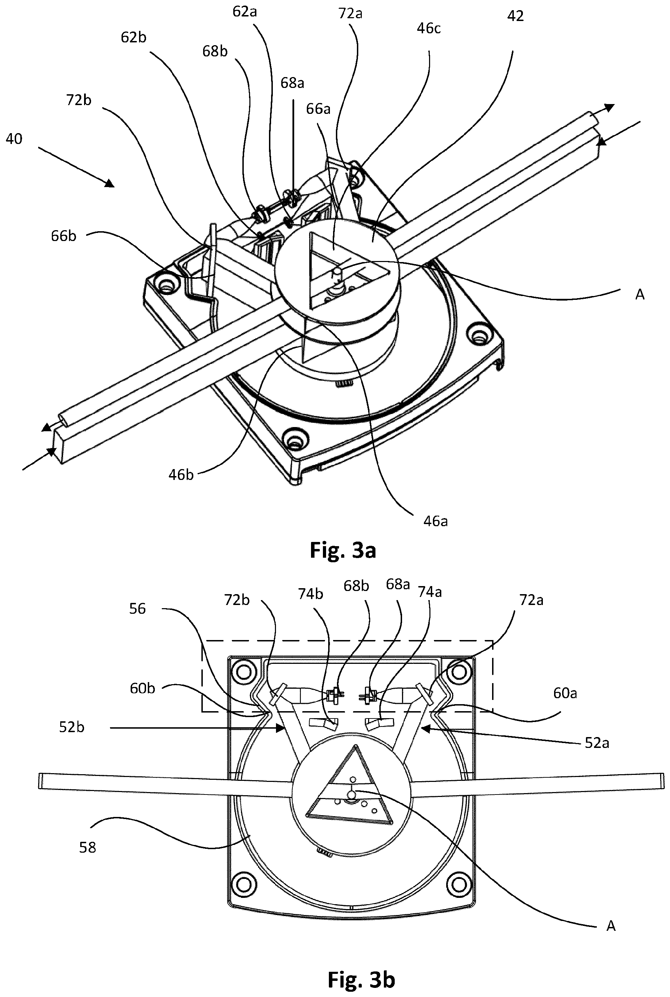

Fig. 3a shows a further embodiment of a sensor 40 according to the invention having a similar setup as the sensor described in Fig.1a. The sensor 40 comprises a rotating mirror 42 having three facets 46a, 46b, 46c, which have the same inclination relative to the rotation axis A of the rotating mirror 42. In this case, the sensor 40 can monitor a scanning range having a field angle FA of about 270°.

There are at least two optical components in each optical path, namely in the emitting optical path a pulse generation unit 68a, 68b and a mirror 72a, 72b. Each emitting optical path comprises an optical component in form of a mirror 72a, 72b that deflects the emitted beam to generate an incident optical path in a way that the intersection angle IA between the two incident optical paths is 45°, in this case. In this arrangement, the mirrors 72a, 72b are the closest optical components to the rotating mirror along the optical path.

The echoed pulse is guided along the receiving optical path, which comprises optical components being mirrors 66a, 66b and receivers 62a, 62b. The mirror 72a and 66a can be manufactured as a single reflective part. So can the mirrors 72b and 66b. Preferably, there is an optical shielding between the mirrors 66a, 72a or attached to the single reflective part, dividing these two mirrors.

The incident beam projections cross at an intersection plane P. The rotation axis is parallel to this intersection plane and is distant to the intersection plane P.

As can be seen from Fig. 3b, the center of rotation lies between the intersection plane and the mirrors 72a, 72b.

The sensor 40 comprises optical feedback components 74a, 74b guiding the emitted beam to the receivers 62a, 62b.

Fig. 3b shows that the optical components are placed inside a non-transparent housing 56 and the rotating mirror 42 is placed within a transparent housing 58, that is at least partially transparent, to allow the passage of the beams. The transparent housing 58 is a curved window that extends from a first angular position 60a to a second angular position 60b. The non-transparent part of the housing is indicated by the dashed rectangle.

There is an opening in the non-transparent housing 56 and the transparent housing 58 stretching from the first angular position 60a to 60b that is smaller than the maximum extension of the transparent housing 58 in the same direction. Both housings 56, 58 can be part of a single housing of the device.

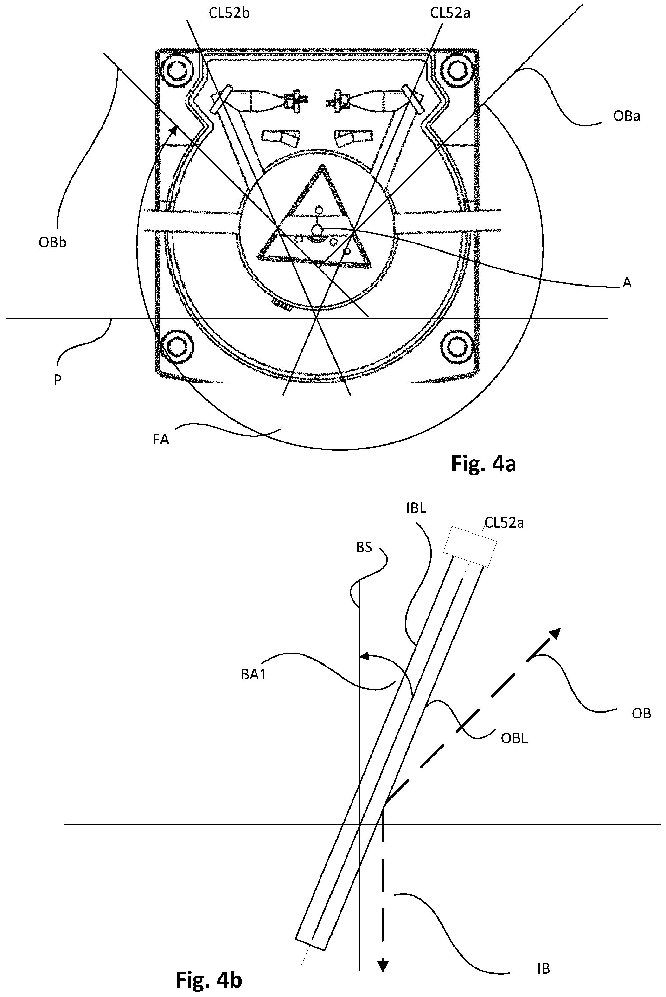

Fig. 4a shows the incident beams at an intersection angle 45° where the bisectrix angle BA1 is 22,5°.

The outermost beams OBa, OBb lie at +45° and -45° relative to the bisectrix; accordingly, the scanning field has a range of 270°.

Figs. 4b to 4e show an exemplary condition of the setup of the center of rotation relative to the incident beam projections.

Fig. 4b shows the beam projection 52a with its center line CL52a around which there is a pulse corridor being defined as having the 1.5 times the width of the beam projection 52a. The corridor is defined by an inner border line IBL and an outer borderline OBL. The scanning field of the first incident beam 52a is established between an outermost beam OB at a first angular rotary position of the rotating mirror 42 and an innermost beam IB at a second angular rotary position. The angle BA1 between the incident beam projection and the bisectrix of the incident beams is, per definition, the half of the intersection angle IA.

The intersection point is defined by the intersection of the bisectrix BS with the center line CL52a incident beam projection. The setup is symmetric to the bisectrix.

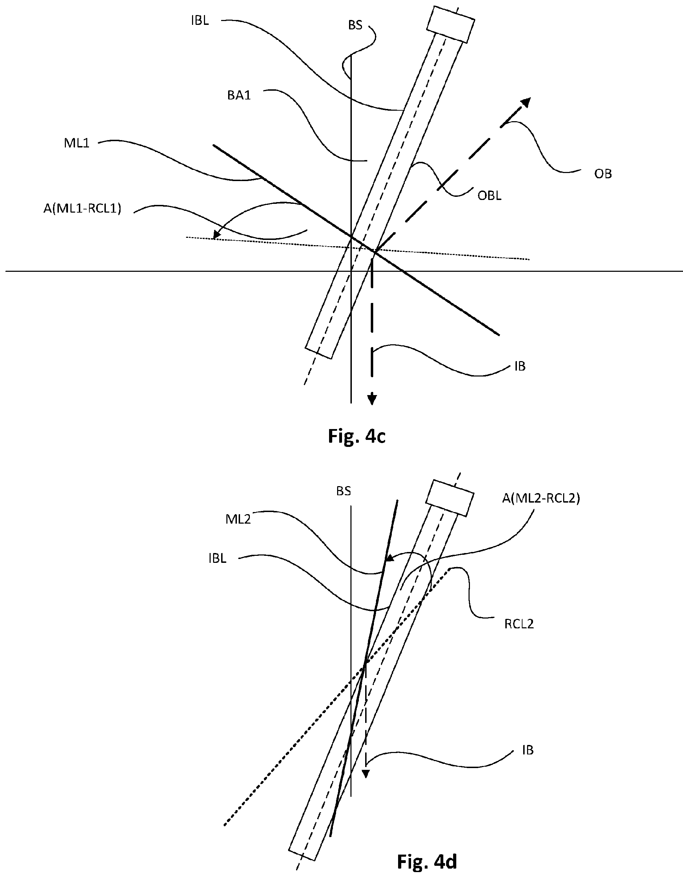

Fig. 4c shows a first mirror line ML1 in the first angular rotary position of the rotating mirror where it generates the outermost beam. At the intersection of the first mirror line ML1 with the outer borderline OBL, a first rotation-center line RCL1 is defined that crosses the intersection of the outer borderline OBL and the first mirror line ML1. The angle between the first mirror line ML1 and the first rotation-center line RCL1 is A_{(ML1-RCL1)} = (N - 2) * 90 / N, where the rotation-center line RCL1 crosses the bisectrix. N is the number of facets of the mirror which, according to this example, is three. The angle between the rotation-center line RCL1 and the first mirror line ML1 is 30°.

Fig. 4d shows a second mirror line ML2 in the second angular rotary position of the rotating mirror at which the innermost beam IB is generated. A second rotation-centerline RCL2 is defined that crosses the intersection of the inner borderline IBL and the second mirror line ML2, where the angle between the second mirror line ML2 and the second rotation-centerline RCL2 is A_{(ML2-RCL2)} = (N - 2) * 90 / N. The rotation-center line RCL2 crosses the bisectrix. The angle between the rotation-center line RCL2 and the first mirror line ML2 is 30°. The triangle of first mirror line ML1, second mirror line ML2 and each rotation-center line, RCL1, RCL2 has an acute angle between first mirror line ML1 and second mirror line ML2.

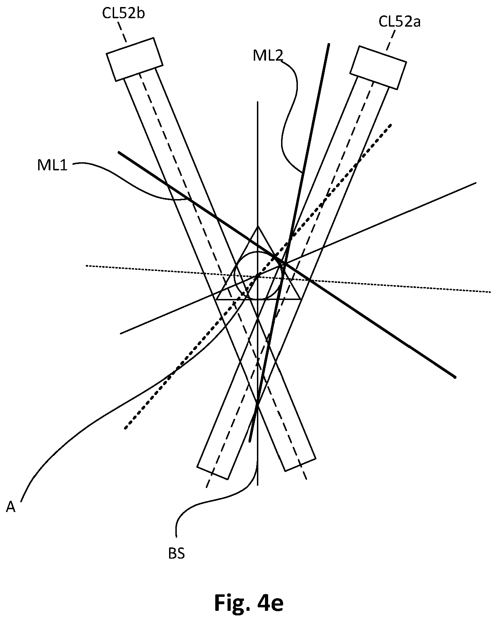

Fig. 4e shows the center of rotation A, where the bisectrix of the first mirror line and the first rotation-center line RCL1 and the second rotation center line RCL2 intersect. This intersection lies on the bisectrix BS of the incident beams.

The minimum of the inradius of the mirror 42 is then at least the distance of the center of rotation A of the mirror 42 to the mirror lines ML1 and ML2.

According to such a setup, a device can be provided having a small size and a rather huge scanning field.

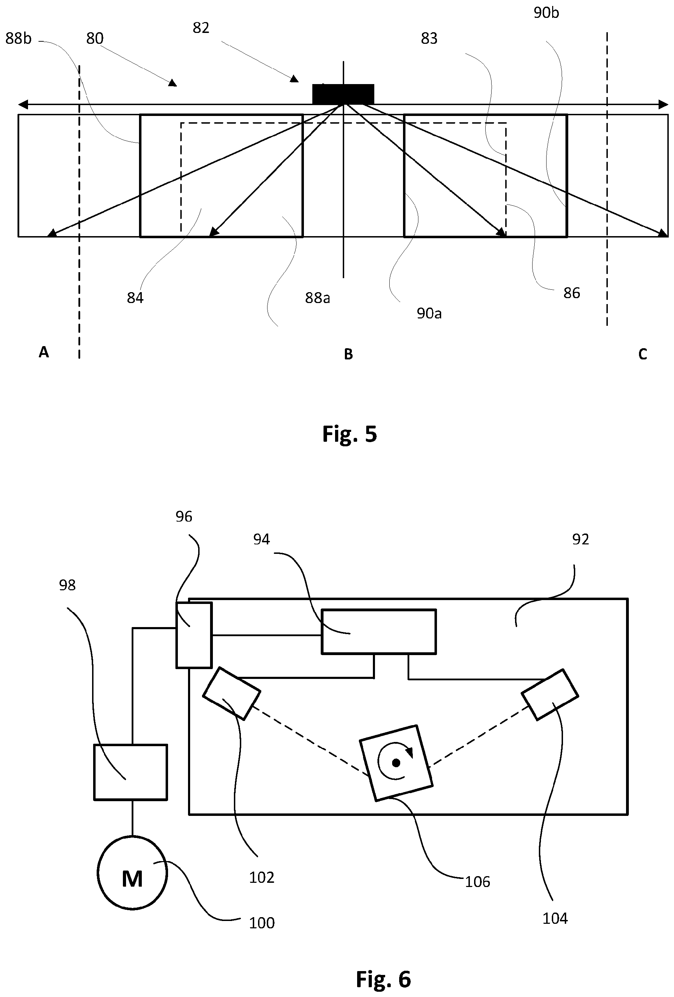

Fig. 5 shows an automatic sliding door assembly 80 according to the invention. The automatic sliding door assembly 80 comprises a sensor 82 and two sliding door leaves 84, 86. The first door leaf has a main closing edge 88a and a secondary closing edge 88b and the second door leaf 86 has a main closing edge 90a and a secondary closing edge 90b. The sensor 82 has a field angle of 180° and is, for example, embodied as shown in Fig. 1a. The sensor 82 provides different information depending on the detection zone in which an object is detected. The zones in this case are A, B and C. Zone A and C are supposed to prevent a collision of an object with the secondary closing edges 88b and 90b of the door leaves 84, 86. Especially a pinching between the door leaves and a wall during opening shall be prevented.

Zone B is monitored to prevent an object from being crushed between the main closing edges 88a, 90a of the two door leaves 84, 86.

Accordingly, the door controller of the automatic door is influenced in a way that it stops or reverses the movement of the door leaves depending on the motion direction of the door and the zone where an object is detected.

Fig. 6 shows a schematic view of a sensor 92 according to the invention as it is to be integrated in an automatic door or gate (not shown). The automatic door or gate comprises at least one leaf which is driven by a motor 100. The sensor 92 comprises two light-pulse echo units 102, 104. The emitting and receiving beams of both light-pulse echo units 102, 104 are deflected by the rotating mirror 106 which comprises four facets to provide four curtains, where said four facets are preferably inclined relative to each other to provide four planes intersecting in the sensor. Both light-pulse echo units 102, 104 are connected to an evaluation unit 94. As the light beams of the first light-pulse echo unit 102 and the second light-pulse echo unit 104 are deflected by the same rotating mirror, a very precise detection within the scanning field can be achieved. As both light-pulse echo units 102, 104 are connected to the same evaluation unit 94, the evaluation of the scanning field can be based on the information gathered by both light-pulse echo units 102, 104. An advantage is gained because the two light-pulse echo units may produce a scanning field that has an overlapping area which is scanned from two directions. Due to this situation and the common evaluation unit 94, a shadowing effect in this area can be reduced.

The evaluation unit 94 evaluates the position of an object within the scanning field and will then trigger an output port 96 to act on a control unit 98 to influence the motor 100 driving the leaf.

The evaluation unit 94 can trigger different signals depending on the detection of an object within a predefined zone of the scanning field.

This schematic basic setup as described with regard to Fig. 6 can comprise an optical setup as described with regard to Fig. 1a or Fig. 3a.

According to the invention a very large scanning area can be monitored in a very precise way by a single sensor 92, being part of an automatic door or an automatic gate.

### List of reference signs

- 10: sensor
- 12: rotating mirror
- 14a-14e: mirror facets
- 16a-16e: mirror facets
- 18a: pulse generation units
- 18a: optical components
- 20a, 20b: emitting optical paths
- 22a: emitting beam
- 24b: receiving beam
- 27a, 27b: receivers
- 26a: optical feedback component
- 28: window
- 29a, 29b: receiving lens
- 32: non-transparent housing
- 40: sensor
- 42: rotating mirror
- 46a-46c: mirror facets
- 52a, 52b: beam projection
- 56: non-transparent housing
- 58: transparent housing
- 60a, 60b: first angular position
- 62a,62b: receivers
- 66a to 66c: mirrors
- 68a: pulse generation unit
- 68b: pulse generation unit
- 72a, 72b: mirror

- 74a, 74b: feedback components
- 80: automatic sliding door assembly
- 82: sensor
- 84: door leaf
- 86: door leaf
- 88a: main closing edge
- 88b: secondary closing edge
- 90a: main closing edge
- 90b: secondary closing edge
- 92: sensor
- 94: evaluation unit
- 96: output port
- 98: control unit
- 100: motor
- 102: light-pulse echo unit
- 104: light-pulse echo unit
- 106: rotating mirror
- A: rotation axis
- BA1: bisectrix angle
- BS: bisectrix
- CL22a: center line
- CL22b: center line
- CL52a: center line
- CL52b: center line
- FA: field angle
- IA: intersection angle
- IB: innermost beam
- IBL: inner border line
- ML1: first mirror line
- ML2: second mirror line
- OBa, OBb: outermost beams
- OBL: outer border line
- P: intersection plane
- RCL1: first rotation-center line
- RCL2: second rotation-center line
- R: reference plane

## Claims

1. Sensor (10, 40) for automatic doors or automatic gates, where the sensor (10, 40) works based on a pulse-echo evaluation:
comprising a rotating mirror (12, 42), where the rotating mirror (12, 42) comprises at least three different emitting mirror facets (14a-14e, 46a-46c) where the rotational axis lies normal to a reference plane,
comprising at least one light-pulse generation unit (18a, 18b, 68a, 68b) generating infrared pulses having a certain beam width, where the pulses are sent along two different emitting optical paths (20a, 20b), where each optical path (20a, 20b) comprises at least one optical component (18a, 18b, 68a, 68b, 72a, 72b),
where the emitting optical paths (20a, 20b) are embodied in a way that the emitted pulses can be reflected by the mirror facets (14a-14e, 46a-46c), and that each emitting optical path (20a, 20b) defines an incident pulse direction of the emitted pulses that is the direction of each pulse with which it hits the mirror, and that the reflected pulses establish a scanning field, where each of the reflected pulse directions defines a reflected beam projection by its projection on the reference plane (R),
where the emitting optical paths (20a, 20b) are arranged so that the angle (IA) between the projections of the incident beams, i.e., the projections of the incident pulse directions onto the reference plane, is between 30° and 160°,
where, furthermore, the rotational axis (A) lies on the bisectrix (BS) of the projections of the incident beams between an intersection plane (P) and the optical component that lies closest to the rotating mirror seen along the optical path,
where the intersection plane (P) is perpendicular to the bisectrix and includes an intersecting point, where the intersecting point is the intersection of the projections of the incident beams,
where the rotating mirror (12, 42) and the rotational axis (A) of the rotating mirror (12, 42) are set in a way that the reflected beam projections (22a, 22b) from each of both incident optical paths at respective angular rotary positions of the rotary mirror (12, 42) have an innermost reflected pulse (IB) that is at least parallel to the bisectrix (BS) or even crosses the bisectrix (BS) on the side of the scanning field,
and that the scanning field is delimited by two outermost reflected pulses (OBa, OBb), where the scanning field between the two outermost pulses (OBa, OBb), has an angular range of more than 150°,
the rotating mirror (12, 42) comprises the same amount of receiving mirror facets (16a-16e) as emitting mirror facets (14a-14e, 46a-46c),
the reflected pulse can be echoed back by an object in the scanning field where the echoed pulse is reflected by the receiving mirror facet (16a-16e) and is then received by a receiver (26a, 26b, 62a, 62b) in a way that it is distinguishable over which emitting optical path (20a, 20b) the emitted pulse of the echoed pulse was initially sent.

2. Sensor (10) for automatic doors according to claim 1 **characterized in that** the emitting mirror facets (14a-14e) rotating around a rotational axis (A) have at least two facets (14a-14e), that are differently inclined relative to the reference plane.

3. Sensor (10) for automatic doors according to any one of the preceding claims, **characterized in that** the facets (14a-14e), except a 0° facet that is parallel to the rotational axis, have a pivotal line, around which the facets are tilted and where the pivotal lines are at the same height of the facet.

4. Sensor according to any one of the preceding claims **characterized in that** the sensor (40, 60) comprises a housing that comprises a curved window (28, 58) which is transparent for the emitting pulse, where the curved window stretches from a start angular position (30a, 60a) to an end angular position (30b, 60b), where the rotational axis (A) lies between the connection line of the start position (30a, 60a) and the end angular position (30b, 60b) and the curved window (28, 58) at the angular position in the middle of the start angular position (30a, 60a) and the end angular position (30b, 60b).

5. Sensor according to claim 4 **characterized in that** a shape of the curved window (28, 58) is essentially circular.

6. Sensor according to any one of the preceding claims **characterized in that** the sensor (40, 60) is embodied in a way that the first emitting optical path (20a, 20b) and a receiving optical path are one atop the other, and the sensor comprises an optical feedback component that can guide a beam from the emitting optical path to the receiving optical path at a certain angular position of the mirror.

7. Sensor according to claim 6 **characterized in that** the optical feedback component is positioned between the rotating mirror (12, 42) and the curved window.

8. Sensor according to claim 6 or 7 **characterized in that** the width of at least one facet (14a) is significantly larger than that of the other facets (14b to 14e) to allow a reflection of the emitting pulse to reach the optical feedback component (26a, 26b).

9. Sensor according to any one of the preceding claims **characterized in that** the receiving mirror facets (16a-16e) and the emitting mirror facets (14a-14e) have the same rotational axis (A) and lie one above the other.

10. Sensor according to claim 9 **characterized in that** the rotational mirror (12, 42) is a one-piece mirror drum.

11. Automatic door (80) or gate comprising at least one automatically driven leaf (84, 86), to cover a door opening (83), where the automatic door or gate (80) comprises a sensor (82) according to any one of the preceding claims to determine the presence of an object in vicinity of the door opening (83), a control unit (98) that controls the movement of the at least one leaf (84, 86) depending on the detection status of the sensor (82, 92), where furthermore the sensor (82) comprises an evaluation unit that determines the position of an object in the scanning field by taking into account the TOF measurements of both light-pulse echo units.

12. Automatic sliding door or gate, where the sensor is embodied as claimed in claims 1 to 10.

13. Automatic door according to claim 11 or 12 **characterized in that** the door comprises two automatically driven sliding door leaves (84, 86), where the sensor (82) is mounted atop the sliding door leaves (84, 86) and provides at least three curtains where at least one curtain extends in an almost vertical direction, which is generally parallel to the door leaves (84, 86), or in an acute angle relative to the door leaves (84, 86), the door leaves (84, 86) each having a main closing edge (88a, 90a) and a secondary closing edge (88b,90b), where the scanning field stretches from the secondary closing edge (88b) of the first door leaf (84) to the secondary closing edge (90b) of the second door leaf (86).

14. Automatic door according to claim 13 **characterized in that** the sensor provides at least three subsequent zones (A, B, C) which are subsequent in width direction, where the sensor (80) has a first secondary closing edge zone (A), a main zone (B), and a second secondary closing edge zone (C), where a detection in the first secondary closing edge zone (A) leads to a first signal to trigger a first action on a door controller, the detection on the main zone (B) leads to a signal to trigger a second action that is different from the first action and a detection in the third zone (C) leads to a signal to trigger a third action that is different to the second action.

## Patentansprüche

1. Sensor (10, 40) für automatische Türen oder automatische Tore, wobei der Sensor (10, 40) auf der Grundlage einer Impuls-Echo-Auswertung arbeitet:
umfassend einen Drehspiegel (12, 42), wobei der Drehspiegel (12, 42) zumindest drei verschiedene emittierende Spiegelfacetten (14a-14e, 46a-46c) aufweist, wobei die Drehachse senkrecht zu einer Bezugsebene verläuft,
umfassend zumindest eine Lichtimpulserzeugungseinheit (18a, 18b, 68a, 68b), die Infrarotimpulse mit einer bestimmten Strahlbreite erzeugt, wobei die Impulse über zwei verschiedene emittierende Strahlengänge (20a, 20b) gesendet werden, wobei jeder Strahlengang (20a, 20b) zumindest ein optisches Bauelement (18a, 18b, 68a, 68b, 72a, 72b) umfasst, wobei die emittierende Strahlengänge (20a, 20b) derart ausgebildet sind, dass die emittierten Impulse von den Spiegelfacetten (14a-14e, 46a-46c) reflektiert werden können und dass jeder emittierende Strahlengang (20a, 20b) eine Impuls-Einfallsrichtung der emittierten Impulse definiert, die der Richtung jedes Impulses entspricht, in der dieser auf den Spiegel trifft, und dass die reflektierten Impulse ein Abtastfeld bilden, wobei jede der reflektierten Impulsrichtungen durch ihre Projektion auf die Bezugsebene (R) eine reflektierte Strahlprojektion definiert, wobei die emittierenden Strahlengänge (20a, 20b) derart angeordnet sind, dass der Winkel (IA) zwischen den Projektionen der einfallenden Strahlen, d. h. den Projektionen der Richtungen der einfallenden Impulse auf die Bezugsebene, zwischen 30° und 160° liegt,
wobei des Weiteren die Drehachse (A) auf der Winkelhalbierenden (BS) der Projektionen der einfallenden Strahlen zwischen einer Schnittebene (P) und dem optischen Bauelement liegt, das entlang des Strahlengangs betrachtet dem Drehspiegel am nächsten liegt,
wobei die Schnittfläche (P) senkrecht zur Winkelhalbierenden steht und einen Schnittpunkt enthält, wobei es sich bei dem Schnittpunkt um den Schnittpunkt der Projektionen der einfallenden Strahlen handelt, wobei der Drehspiegel (12, 42) und die Drehachse (A) des Drehspiegels (12, 42) derart eingestellt sind, dass die Projektionen der reflektierten Strahlen (22a, 22b) von jedem der beiden Einfallsstrahlengänge bei entsprechenden Drehstellungen des Drehspiegels (12, 42) einen innersten Reflexionsimpuls (IB) aufweisen, der zumindest parallel zur Winkelhalbierenden (BS) verläuft oder diese auf der Seite des Abtastfeldes sogar schneidet,
und dass das Abtastfeld durch zwei äußerste reflektierte Impulse (OBa, OBb) begrenzt wird, wobei das Abtastfeld zwischen diesen beiden äußersten Impulsen (OBa, OBb) einen Winkelbereich von mehr als 150° aufweist,
der Drehspiegel (12, 42) die gleiche Anzahl an empfangenden Spiegelfacetten (16a-16e) wie an emittierenden Spiegelfacetten (14a-14e, 46a-46c) aufweist,
der reflektierte Impuls von einem Objekt im Abtastfeld zurückgeworfen werden kann, wobei der zurückgeworfene Impuls von der empfangenden Spiegelfacette (16a-16e) reflektiert und anschließend von einem Empfänger (26a, 26b, 62a, 62b) derart empfangen wird, dass unterscheidbar ist, über welchen emittierenden Strahlgang (20a, 20b) der emittierte Impuls des zurückgeworfenen Impulses ursprünglich gesendet wurde.

2. Sensor (10) für automatische Türen nach Anspruch 1, **dadurch gekennzeichnet, dass** die sich um eine Drehachse (A) drehenden emittierenden Spiegelfacetten (14a-14e) zumindest zwei Facetten (14a-14e) aufweisen, die gegenüber der Bezugsebene unterschiedlich geneigt sind.

3. Sensor (10) für automatische Türen nach einem der voranstehenden Ansprüche, **dadurch gekennzeichnet, dass** die Facetten (14a-14e) - mit Ausnahme einer zur Drehachse parallelen 0°-Facette - eine Schwenkachse aufweisen, um die sie geneigt sind, wobei die Schwenkachsen auf derselben Höhe der Facette liegen.

4. Sensor nach einem der voranstehenden Ansprüche, **dadurch gekennzeichnet, dass** der Sensor (40, 60) ein Gehäuse umfassend ein gewölbtes Fenster (28, 58) umfasst, das für den emittierten Impuls durchlässig ist, wobei sich das gewölbte Fenster von einer Ausgangswinkelstellung (30a, 60a) bis zu einer Endwinkelstellung (30b, 60b) erstreckt, wobei die Drehachse (A) zwischen der Verbindungslinie der Ausgangsstellung (30a, 60a) und der Endwinkelstellung (30b, 60b) und dem gewölbten Fenster (28, 58) an der Winkelstellung in der Mitte zwischen der Ausgangswinkelstellung (30a, 60a) und der Endwinkelstellung (30b, 60b) liegt.

5. Sensor nach Anspruch 4, **dadurch gekennzeichnet, dass** das gewölbte Fenster (28, 58) im Wesentlichen kreisförmige Form hat.

6. Sensor nach einem der voranstehenden Ansprüche, **dadurch gekennzeichnet, dass** der Sensor (40, 60) derart ausgebildet ist, dass der erste emittierende Strahlengang (20a, 20b) und ein empfangender Strahlengang übereinander liegen, und der Sensor eine optische Rückkopplungskomponente umfasst, die einen Strahl bei einer bestimmten Winkelstellung des Spiegels von dem emittierenden Strahlengang zu dem empfangenden Strahlengang leiten kann.

7. Sensor nach Anspruch 6, **dadurch gekennzeichnet, dass** die optische Rückkopplungskomponente zwischen dem Drehspiegel (12, 42) und dem gewölbten Fenster angeordnet ist.

8. Sensor nach Anspruch 6 oder 7, **dadurch gekennzeichnet, dass** die Breite zumindest einer Facette (14a) deutlich größer ist als die der anderen Facetten (14b bis 14e), sodass eine Reflexion des emittierten Impulses die optische Rückkopplungskomponente (26a, 26b) erreichen kann.

9. Sensor nach einem der voranstehenden Ansprüche, **dadurch gekennzeichnet, dass** die empfangenden Spiegelfacetten (16a-16e) und die emittierenden Spiegelfacetten (14a-14e) dieselbe Drehachse (A) haben und übereinander liegen.

10. Sensor nach Anspruch 9, **dadurch gekennzeichnet, dass** es sich bei dem Drehspiegel (12, 42) um eine einteilige Spiegeltrommel handelt.

11. Automatische Tür (80) oder automatisches Tor mit zumindest einem automatisch angetriebenen Flügel (84, 86) zum Verschließen einer Türöffnung (83), wobei die automatische Tür bzw. das automatische Tor (80) einen Sensor (82) gemäß einem der voranstehenden Ansprüche umfasst, um die Anwesenheit eines Objekts in der Nähe der Türöffnung (83) festzustellen, eine Steuereinheit (98), die die Bewegung des zumindest einen Flügels (84, 86) in Abhängigkeit von dem Erkennungsstatus des Sensors (82, 92) steuert, wobei der Sensor (82) des Weiteren eine Auswerteeinheit umfasst, die die Position eines Objekts im Abtastfeld unter Berücksichtigung der Lichtlaufzeit-Messungen beider Lichtimpuls-Echoeinheiten bestimmt.

12. Automatische Schiebetür oder automatisches Schiebetor, bei der bzw. dem der Sensor gemäß den Ansprüchen 1 bis 10 ausgebildet ist.

13. Automatische Tür gemäß Anspruch 11 oder 12, **dadurch gekennzeichnet, dass** die Tür zwei automatisch angetriebene Schiebetürflügel (84, 86) umfasst, wobei der Sensor (82) oberhalb der Schiebetürflügel (84, 86) angebracht ist und zumindest drei Vorhänge erzeugt, wobei sich zumindest ein Vorhang in nahezu vertikaler Richtung erstreckt, die im Allgemeinen parallel zu den Türflügeln (84, 86) verläuft oder in einem spitzen Winkel zu den Türflügeln (84, 86), wobei die Türflügel (84, 86) jeweils eine Hauptschließkante (88a, 90a) und eine sekundäre Schließkante (88b, 90b) aufweisen, wobei sich das Abtastfeld von der sekundären Schließkante (88b) des ersten Türflügels (84) bis zur sekundären Schließkante (90b) des zweiten Türflügels (86) erstreckt.

14. Automatiktür nach Anspruch 13, **dadurch gekennzeichnet, dass** vom Sensor zumindest drei aufeinanderfolgende Zonen (A, B, C) bereitgestellt werden, die in Breitenrichtung hintereinander liegen, wobei der Sensor (80) eine erste sekundäre Schließkanten-Zone (A), eine Hauptzone (B) und eine zweite sekundäre Schließkanten-Zone (C) aufweist, wobei eine Erkennung im Bereich der ersten sekundären Schließkanten-Zone (A) zu einem ersten Signal führt, das eine erste Aktion an einer Türsteuerung auslöst, die Erkennung im Bereich der Hauptzone (B) zu einem Signal führt, das eine sich von der ersten Aktion unterscheidende zweite Aktion auslöst, und eine Erkennung im Bereich der dritten Zone (C) zu einem Signal führt, das eine sich von der zweiten Aktion unterscheidende dritte Aktion auslöst.

## Revendications

1. Capteur (10, 40) pour portes automatiques ou portails automatiques, dans lequel le capteur (10, 40) fonctionne sur la base d'une évaluation par impulsion-écho :
comprenant un miroir rotatif (12, 42), dans lequel le miroir rotatif (12, 42) comprend au moins trois facettes de miroir d'émission différentes (14a-14e, 46a-46c), dans lequel l'axe de rotation est normal par rapport à un plan de référence,
comprenant au moins une unité de génération d'impulsions lumineuses (18a, 18b, 68a, 68b) générant des impulsions infrarouges présentant une certaine largeur de faisceau, dans lequel les impulsions sont envoyées le long de deux trajets optiques d'émission différents (20a, 20b), dans lequel chaque trajet optique (20a, 20b) comprend au moins un composant optique (18a, 18b, 68a, 68b, 72a, 72b),
dans lequel les trajets optiques d'émission (20a, 20b) sont mis en œuvre de façon à ce que les impulsions émises puissent être réfléchies par les facettes de miroir (14a-14e, 46a-46c) et que chaque trajet optique d'émission (20a, 20b) définisse une direction d'impulsion incidente des impulsions émises, qui est la direction de chaque impulsion avec laquelle elle heurte le miroir, et que les impulsions réfléchies établissent un champ de balayage, dans lequel chaque direction d'impulsion réfléchie définit une projection de faisceau réfléchi par sa projection sur le plan de référence (R),
dans lequel les trajets optiques d'émission (20a, 20b) sont agencés de sorte que l'angle (IA) entre les projections des faisceaux incidents, c'est-à-dire les projections des directions des impulsions incidentes sur le plan de référence, est compris entre 30° et 160°,
dans lequel, en outre, l'axe de rotation (A) se trouve sur la bissectrice (BS) des projections des faisceaux incidents entre un plan d'intersection (P) et le composant optique qui se trouve le plus à proximité du miroir rotatif observé le long du trajet optique,
dans lequel le plan d'intersection (P) est perpendiculaire à la bissectrice et comprend un point d'intersection, dans lequel le point d'intersection est l'intersection des projections des faisceaux incidents,
dans lequel le miroir rotatif (12, 42) et l'axe de rotation (A) du miroir rotatif (12, 42) sont placés de sorte que les projections des faisceaux réfléchis (22a, 22b) issus de chacun des deux trajets optiques incidents, aux positions angulaires rotatives respectives du miroir rotatif (12, 42) présentent l'impulsion réfléchie située le plus à l'intérieur (IB), qui est au moins parallèle à la bissectrice (BS) ou même qui croise la bissectrice (BS) sur le côté du champ de balayage,
et en ce que le champ de balayage est délimité par les deux impulsions réfléchies situées le plus à l'extérieur (OBa, OBb), où le champ de balayage entre les deux impulsions situées le plus à l'extérieur (OBa, OBb), a une plage angulaire supérieure à 150°,
le miroir rotatif (12, 42) comprend la même quantité de facettes de miroir de réception (16a-16e) que les facettes de miroir d'émission (14a-14e, 46a-46c),
l'impulsion réfléchie peut être renvoyée par un objet dans le champ de balayage où l'impulsion renvoyée est réfléchie par la face de miroir de réception (16a-16e) et est ensuite reçue par un récepteur (26a, 26b, 62a, 62b) de manière à permettre de distinguer par quel trajet optique d'émission (20a, 20b) l'impulsion émise de l'impulsion renvoyée a été initialement envoyée.

2. Capteur (10) pour portes automatiques selon la revendication 1, **caractérisé en ce que** les facettes de miroir d'émission (14a-14e) tournant autour d'un axe de rotation (A) ont au moins deux facettes (14a-14e) qui sont inclinées différemment par rapport au plan de référence.

3. Capteur (10) pour portes automatiques selon l'une quelconque des revendications précédentes, **caractérisé en ce que** les facettes (14a-14e), excepté une facette à 0° qui est parallèle à l'axe de rotation, ont une ligne pivotante, autour de laquelle les facettes sont inclinées et où les lignes pivotantes sont à la même hauteur de la facette.

4. Capteur selon l'une quelconque des revendications précédentes, **caractérisé en ce que** le capteur (40, 60) comprend un boîtier qui comprend une fenêtre courbée (28, 58) qui est transparente pour l'impulsion d'émission, dans lequel la fenêtre courbée s'étire à partir d'une position angulaire de départ (30a, 60a) jusqu'à une position angulaire de fin (30b, 60b), dans lequel l'axe de rotation (A) se trouve entre la ligne de raccordement de la position de départ (30a, 60a) et la position angulaire de fin (30b, 60b) et la fenêtre courbée (28, 58) à la position angulaire au milieu de la position angulaire de départ (30a, 60a) et de la position angulaire de fin (30b, 60b).

5. Capteur selon la revendication 4, **caractérisé en ce qu'**une forme de la fenêtre courbée (28, 58) est essentiellement circulaire.

6. Capteur selon l'une quelconque des revendications précédentes, **caractérisé en ce que** le capteur (40, 60) est mis en œuvre de sorte que le premier trajet optique d'émission (20a, 20b) et un trajet optique de réception sont disposés l'un au-dessus de l'autre et le capteur comprend un composant de retour optique qui peut guider un faisceau du trajet optique d'émission au trajet optique de réception dans une certaine position angulaire du miroir.

7. Capteur selon la revendication 6, **caractérisé en ce que** le composant de retour optique est positionné entre le miroir rotatif (12, 42) et la fenêtre courbée.

8. Capteur selon la revendication 6 ou 7, **caractérisé en ce que** la largeur d'au moins une facette (14a) est considérablement plus grande que celle des autres facettes (14b à 14e) pour permettre à une réflexion de l'impulsion d'émission d'atteindre le composant de retour optique (26a, 26b).

9. Capteur selon l'une quelconque des revendications précédentes, **caractérisé en ce que** les facettes de miroir de réception (16a-16e) et les facettes de miroir d'émission (14a-14e) ont le même axe de rotation (A) et se trouvent les unes au-dessus des autres.

10. Capteur selon la revendication 9, **caractérisé en ce que** le miroir rotatif (12, 42) est un tambour de miroir d'un seul tenant.

11. Porte (80) ou portail automatique comprenant au moins un vantail entraîné automatiquement (84, 86) pour couvrir une ouverture de porte (83), dans laquelle ou lequel la porte ou portail automatique (80) comprend un capteur (82) selon l'une quelconque des revendications précédentes afin de déterminer la présence d'un objet à proximité de l'ouverture de porte (83), une unité de commande (98) qui commande le déplacement du au moins un vantail (84, 86) en fonction de l'état de détection du capteur (82, 92), dans laquelle ou lequel en outre le capteur (82) comprend une unité d'évaluation qui détermine la position d'un objet dans le champ de balayage en prenant en compte les mesures TOF des deux unités impulsion-écho à impulsions lumineuses.

12. Porte ou portail coulissant(e) automatique, dans laquelle ou lequel le capteur est mis en œuvre selon les revendications 1 à 10.

13. Porte automatique selon la revendication 11 ou 12, **caractérisée en ce que** la porte comprend deux vantaux de porte coulissante entraînés automatiquement (84, 86), dans laquelle le capteur (82) est monté au-dessus des vantaux de porte coulissante (84, 86) et fournit au moins trois rideaux, dans laquelle au moins un rideau s'étend dans une direction presque verticale, qui est généralement parallèle aux vantaux de porte (84, 86), ou dans un angle aigu par rapport aux vantaux de porte (84, 86), les vantaux de porte (84, 86) ayant chacun un bord de fermeture principal (88a, 90a) et un bord de fermeture secondaire (88b, 90b), dans laquelle le champ de balayage s'étire du bord de fermeture secondaire (88b) du premier vantail de porte (84) au bord de fermeture secondaire (90b) du deuxième vantail de porte (86).

14. Porte automatique selon la revendication 13, **caractérisée en ce que** le capteur fournit au moins trois zones successives (A, B, C) qui sont successives dans la direction de la largeur, dans laquelle le capteur (80) a une première zone de bord de fermeture secondaire (A), une zone principale (B) et une deuxième zone de bord de fermeture secondaire (C), dans laquelle une détection dans la première zone de bord de fermeture secondaire (A) entraîne un premier signal afin de déclencher une première action sur un organe de commande de porte, la détection sur la zone principale (B) entraîne un signal afin de déclencher une deuxième action qui est différente de la première action et une détection dans la troisième zone (C) entraîne un signal afin de déclencher une troisième action qui est différente de la deuxième action.
